# EUROPEAN PATENT APPLICATION

(11) **EP 1 626 273 A1**
(43) Date of publication of application: **15.02.2006**
(21) Application number: 05076576.7
(22) Date of filing: 11.07.2005
(51) Int. Cl.: G01N 27/407

(54) **Methods of making planar sensors and the sensors made therefrom**

(30) Priority: 02.08.2004 US 909507
(71) Applicant: Delphi Technologies, Inc., Troy, MI 48007 (US)
(72) Inventor: Clyde, Eric P., Bay City, MI 48708 (US); Fouts, Richard E., Grand Blanc, MI 48439 (US); Kikuchi, Paul Casey, Fenton, MI 48430 (US); Novak, Jo-Ann S., Oxford, MI 48371 (US); Donelon, Matthew J., Wichita Falls, TX 76309 (US)
(74) Representative: Denton, Michael John

(57) **Abstract**

One method of forming a sensor (10) comprises: disposing a reference electrode (22) and sensing electrode (20) on opposite sides of an electrolyte and a heater (62) on a side of the reference electrode (22) opposite the electrolyte to form a sensor element having a sensing end adjacent the reference electrode (22) and sensing electrode (20), dipping the sensor element in a first slurry, drying the sensor element to form a first coated sensor element, dipping the first coated sensor element into a second slurry, and drying the first coated sensor element to form a dipped sensor element.

## Description

### TECHNICAL FIELD

The present application relates to planar gas sensors, particularly to methods of making planar gas sensors that reduce the thermal stress on the sensor.

### BACKGROUND OF THE INVENTION

Planar gas sensors are used in a variety of applications that require qualitative and quantitative analysis of gases, such as applications that involve automobiles. In automotive applications, the relationship between the oxygen concentration in exhaust gases and the air-to-fuel ratio of a fuel mixture supplied to an engine allows the oxygen sensor to provide oxygen concentration measurements for determining optimum combustion conditions, maximization of fuel economy, and efficient management of exhaust emissions.

Planar oxygen sensors often comprise a pump cell, a reference cell, a chamber between the pump cell and the reference cell, a heater and a ground plane electrode between the heater and the reference cell. The function of the oxygen sensor is to pump any residual oxygen from the chamber through the pump cell to the outside environment. As the oxygen ions, which are proportional to the oxygen concentration of the environmental gas being measured (in this case exhaust), flow through the pump cell, an electric current proportional to the oxygen ion flow is generated thus allowing the oxygen concentration to be determined.

A planar oxygen sensor element comprises a plurality of annealed layers, such as, for example electrolyte layers, electrode layers, heater layers and ceramic layers. During the production of planar sensors, the layers can be stacked in the proper order and aligned. The aligned layers are laminated to formed laminated stacks often referred to as "tiles" that contain multiple sensing elements, wherein lamination is the process of permanently bonding individual layers of, in this case, ceramic tape material using isostatic pressure (e.g., 3,000 pounds per square inch (psi)) at a prescribed temperature (70°C) for a prescribed period of time (e.g., 20 min), the settings are selected depending upon the number of layers and the materials used. The individual planar sensor elements can be removed from the tile, for example, by cutting with a blade such as a carbide blade. Removing the sensor elements from the tile often produces sharp edges. Upon firing of the sensor element, these sharp edges can become points of high thermal stress and can be the origin of thermal cracks during usage of the sensor. In addition, the stress on the sensor can be exacerbated by the presence of a protective coating, such as an aluminium oxide coating, on the outside of the sensor.

Approaches to minimize the stress on the edges of gas sensor elements include mechanical chamfering of the edges after removal of the sensor element from the laminated stack. Chamfering prior to sintering is typically done with a hot knife run at an angle along the edge of the sensor element to remove material. This process is both wasteful of material and time-consuming. Chamfering after sintering is typically done by mechanical grinding that is both costly and has the potential to cause imperfections along the edge of the sensor element. Another approach to stress reduction is not using an aluminium oxide coating, however this approach leaves the sensor element vulnerable to exhaust gas poisons.

There thus remains a need for methods of treating gas sensor elements to reduce stress at the edge of the sensor element, particularly methods suitable for use with sensor elements having a protective coating

### BRIEF SUMMARY OF THE INVENTION

Disclosed herein are methods of making sensors and sensors made therefrom. One method of forming the sensor comprises: disposing a reference electrode and sensing electrode on opposite sides of an electrolyte and a heater on a side of the reference electrode opposite the electrolyte to form a sensor element having a sensing end adjacent the reference electrode and sensing electrode, dipping the sensor element in a first slurry, drying the sensor element to form a first coated element, dipping the first coated element into a second slurry, drying the first coated element to form a dipped sensor element, and calcining the dipped sensor element to form a calcined sensor element.

Another method of making a sensor comprises: laminating a stack comprising sensing electrode and a reference electrode disposed on opposite sides of an electrolyte, with a heater disposed on a side of the reference electrode opposite the electrolyte to form on the heater side of a sensor element, and a protective coating disposed over the sensing electrode and the heater, and cutting a sensor element from the stack with a laser by cutting the stack with a plurality of cuts having decreasing widths to form a chamfered edge on a heater side of the sensor element.

The above described and other features are exemplified by the following figures and detailed description.

### BRIEF DESCRIPTION OF THE DRAWINGS

Refer now to the drawings, which are exemplary, not limiting, and wherein like elements are numbered alike in the several figures.
Figure 1 shows an exemplary embodiment of a planar gas sensor element.
Figure 2 shows air flow data for sensor elements comprising a chamfered edge according to the present disclosure, a sensor element comprising first and second metal oxide coatings wherein the first coating is not calcined prior to applying the second coating, and a sensor element comprising first and second metal oxide coatings wherein the first coating is calcined prior to applying the second coating.
Figures 3 and 4 show cross-sectional views of single dipped sensor elements wherein the coating is not disposed around the corners of the element.
Figures 5 and 6 show cross-sectional views of double dipped sensor elements wherein the coating is disposed around the corners of the sensing end of the sensor element providing protection thereto.
Figure 7 is a graphical illustration of heater power needed to induce a thermal shock crack for a single dipped sensor element and a double dipped sensor element.

### DESCRIPTION OF THE PREFERRED EMBODIMENTS

It is noted that the terms "first," "second," and the like, herein do not denote any amount, order, or importance, but rather are used to distinguish one element from another, and the terms "a" and "an" herein do not denote a limitation of quantity, but rather denote the presence of at least one of the referenced item. Additionally, all ranges disclosed herein are inclusive and combinable (e.g., the ranges of "up to about 25 wt%, with about 5 wt% to about 20 wt% desired," are inclusive of the endpoints and all intermediate values of the ranges of "about 5 wt% to about 25 wt%," etc.).

The method of forming a gas sensor comprises reducing thermal stress at the edges of the sensor. The sensor element can be treated either by chamfering at least part of the edge of the sensor element on a side adjacent the heater, or by increasing the mass of a protective coating at the edges of the sensor element, i.e., attaining a more uniform coating thickness than has previously been obtained with such coatings. Both treatments produce gas sensor elements with less stress at the edges compared to untreated sensor elements and a reduced propensity to form thermal cracks or other deformities propagating from the edges.

Although described in connection with an oxygen sensor, it is to be understood that the sensor could be a nitrogen oxide sensor, hydrogen sensor, hydrocarbon sensor, or the like. Furthermore, while oxygen is the reference gas used in the description disclosed herein, it should be understood that other gases could be employed as a reference gas.

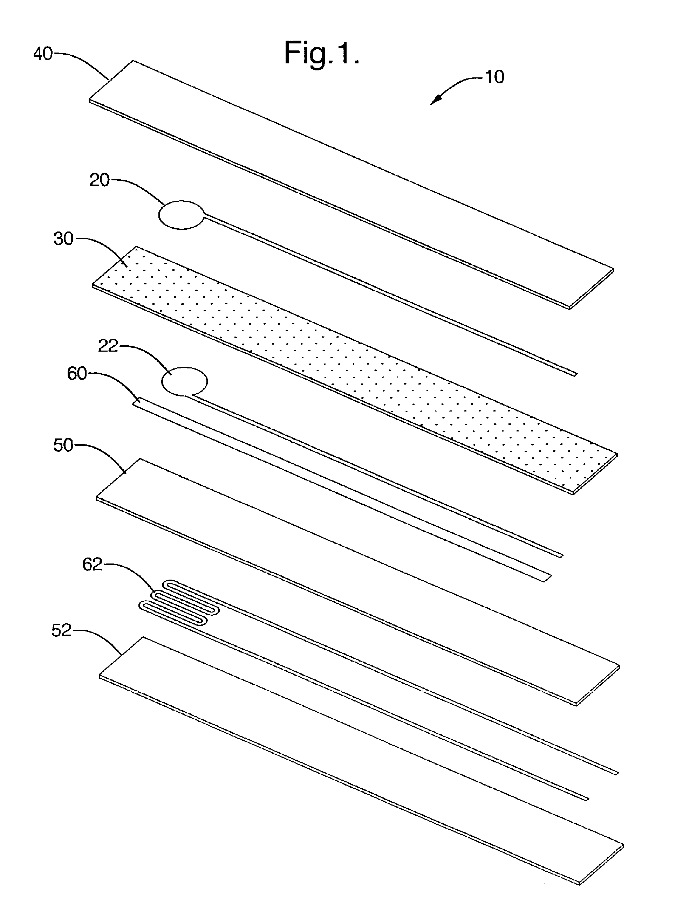

Referring to Figure 1, an exemplary planar gas sensor element 10 is illustrated. The sensing (i.e., sensing gas or outer) electrode 20 and the reference gas (or inner) electrode 22 are disposed on opposite sides of, and adjacent to, an electrolyte layer 30 creating an electrochemical cell (20/30/22). On the side of the sensing electrode 20, opposite electrolyte 30 (i.e., the sensing side), can be a protective coating 40, that enables fluid communication between the sensing electrode 20 and the exhaust gas. Meanwhile, disposed on the side of the reference electrode 22, opposite electrolyte 30, can be an optional reference gas channel 60, which is in fluid communication with the reference electrode 22 and optionally with the ambient atmosphere and/or other reference gas. Disposed on a side of the reference gas channel 60, opposite the reference electrode 22, can be a heater 62 for maintaining sensor element 10 at the desired operating temperature. Disposed between the reference gas channel 60 and the heater 62, as well as on a side of the heater opposite the reference gas channel 60 (i.e., the heater side), can be one or more insulating layers 50, 52.

In addition to the above sensor components, additional sensor components can be employed, including but not limited to, lead gettering layer(s), leads, contact pads, ground plane layers(s), support layer(s), additional electrochemical cell(s), and the like. The leads, which supply current to the heater and electrodes, are often formed on the same layer as the heater/electrode to which they are in electrical communication and extend from the heater/electrode to the terminal end of the gas sensor where they are in electrical communication with the corresponding via (not shown) and appropriate contact pads (not shown).

The electrolyte 30 can be formed of a material that is capable of permitting the electrochemical transfer of oxygen ions while inhibiting the passage of exhaust gases. Possible electrolyte materials include materials such as zirconium oxide, cerium oxide, calcium oxide, yttrium oxide, lanthanum oxide, magnesium oxide, and the like, as well as combinations comprising at least one of the foregoing electrolyte materials, such as yttrium oxide doped zirconium oxide and the like.

Disposed adjacent to electrolyte 30 are electrodes 20, 22. The sensing electrode 20, which is exposed to the gas to be sensed (e.g., to the exhaust gas) during operation, preferably has a porosity sufficient to permit diffusion to oxygen molecules therethrough. Similarly, the reference electrode 22, which can be exposed to a reference gas such as oxygen, air, or the like, during operation, preferably has a porosity sufficient to permit diffusion to oxygen molecules therethrough. These electrodes can comprise a metal capable of ionizing oxygen, including, but not limited to, precious metals such as platinum, palladium, gold, osmium, rhodium, iridium, and ruthenium, and the like as well as combinations comprising at least one of the foregoing metals. Metal oxides may also be included in the electrode, such as zirconium oxide, yttrium oxide, cerium oxide, calcium oxide, aluminum oxide, and the like, as well as combinations comprising at least one of the foregoing metal oxides. The end of the planar sensor comprising the electrodes is referred to as the sensing end.

Heater 62 can be employed to maintain the sensor element at the desired operating temperature. Heater 62 can be a heater capable of maintaining the sensor end at a sufficient temperature to facilitate the various electrochemical reactions therein. Heater 62, which can comprise, for example, platinum, aluminum, palladium, and the like, as well as mixtures, oxides, and alloys comprising at least one of the foregoing metals can be screen printed or otherwise disposed onto a substrate, e.g., to a thickness of about 5 micrometers to about 50 micrometers.

Insulating layers 50, 52, as well as additional optional insulating layers (not shown), provide structural integrity (e.g., protect various portions of the sensor element from abrasion and/or vibration, and the like, and provide physical strength to the sensor), and physically separate and electrically isolate various components. The insulating layer(s) can each be less than or equal to about 200 micrometers thick or so, with a thickness of about 50 micrometers to about 200 micrometers preferred. The insulating layers 50, 52 can comprise a dielectric material such as aluminum oxide, and the like.

Disposed around the sensing end of the sensor is protective coating 40 that protects the sensing electrode 20 from impurities that cause poisoning of the electrode. This protective coating can optionally have a thickness of about 25 micrometers to about 500 micrometers and a porosity of about 10% to about 60%. The protective coating can comprise a spinel (e.g., magnesium aluminate and the like), aluminum oxide, zirconium oxide, lanthanum oxide, barium oxide, calcium oxide, cerium oxide, and the like, as well as combinations comprising at least one of the foregoing materials. The protective coating is typically applied to the sensor element in the form of a slurry. The percentage of solids in the slurry can be about 20 weight percent (wt%) to about 80 wt%, or more specifically, about 30 wt% to about 70 wt%, or even more specifically, about 45 wt% to about 65 wt%, based upon the total weight of the slurry. The viscosity of the slurry can be about 100 Pa·sec (Pascal·second), to about 400 Pa·sec, or, more specifically, about 150 Pa·s to about 350 Pa·sec, and more specifically, about 200 Pa·sec to about 300 Pa·sec. The first and second slurries can be the same or different (e.g., they can be the same slurry or different slurries and can have the same composition and/or concentrations).

In a planar sensor, the sensor element components, e.g., electrodes 20, 22, electrolyte 30, insulating layer 50,52, heater 62, protective coatings 40, and the like, can be formed using techniques such as tape casting methods, sputtering, punching and placing, spraying (e.g., electrostatically spraying, slurry spraying, plasma spraying, and the like), dipping, painting, and the like, as well as combinations comprising at least one of the foregoing techniques. The component layers are then stacked and aligned in accordance with the particular type of sensor. The aligned layers are heat treated (e.g., calcined), to formed laminated stacks often referred to as "tiles" that contain multiple sensor elements. Although individual layers can be calcined prior to stacking, desirably, the components layers are not fully fired (calcined) prior to stacking, with the component layers being in the green state more preferred. Once the stacks or tiles are formed, the edges of the sensor elements can, optionally, be chamfered. If the stacks comprise multiple sensor elements, chamfering can occur while separating the various sensor elements. Methods of separating the various sensor elements include, for example, shearing (e.g., with shearing dies), laser cutting, cutting with a hot blade, stamping, and the like.

The individual sensor elements can then placed in a furnace to remove residual organic compounds and to calcine the ceramic components. Air can be flowed over the sensor elements as the temperature of the furnace is raised through the burnout region, e.g., about 300°C to about 600°C. The temperature can then be raised to calcine the sensor element, e.g., to temperatures of about 1,400°C to about 1,600°C for up to several hours.

In another embodiment, a method of forming a gas sensor comprises dipping a first sensor element in a first slurry, removing the first sensor element from the first slurry, drying the first sensor element in a first vertical position, wherein the first vertical position (e.g., sensing end up or sensing end down) to form a coated sensor element. This process further comprises dipping the coated sensor element in a second slurry, removing the coated sensor element from the second slurry, drying the coated sensor element in a second vertical position, wherein the second vertical position is different from the first vertical position and is sensing end up or sensing end down to form a dipped sensor element, and calcining the dipped sensor element. The coated sensor element can optionally be calcined prior to dipping in the second slurry. Without being held to theory, it is believed that stress at the edges of a gas sensor can be caused by inconsistent thicknesses of protective coatings at the edges of the sensor as compared to the flat area of the sensor. The slurry coating technique can be employed with a chamfered or unchamfered sensor element. By coating the sensor with sequential dippings in a slurry and then drying in alternating vertical positions, a uniform coating can be attained.

Contacting the sensor element with the first and/or second slurry can be performed by various methods, such as, for example, immersion, dipping, spraying, and the like. The contacting can be performed so as to cover at least the sensing end of the sensing element (e.g., the end adjacent the electrodes and heater), and desirably, to cover the entire sensor element with the slurry.

Dipping the sensor element with the first slurry can be performed with a dwell time in the slurry and removal rate from the slurry suitable to give the desired first metal oxide coating thickness. The dwell time and removal rate can be determined based on the percent solids and the viscosity of the slurry. The dwell time can be less than or equal to about 3 seconds, or, more specifically, less than or equal to about 1 second. The removal rate can be about 0.1 cm/sec (centimeters/second) to about 2 cm/sec, or, more specifically, about 0.5 cm/sec to about 1 cm/sec. The insertion rate of contacting the sensor element can be sufficiently slow so as not to cause a "splash" when dipping.

Once the sensor element is removed from the first slurry, the sensor element can be dried to form a first coated sensor element. Drying is preferably performed in a first vertical position, i.e., orienting the first coated sensor element with the sensing end up or with the sensing end down. The drying can be preformed actively or passively, (e.g., with or without the application of heat (e.g., at a temperature of less than 100°C), flowing gas, and/or the like). This drying can be performed for a time and at a temperature sufficient to dry the coating without the formation of defects such as cracks and bubbles (e.g., that can occur when the drying temperature approaches the boiling temperature of water).

Optionally, the dried first metal oxide coating can be partially or fully calcined prior to contacting with a second slurry. Calcining is performed, for example, at temperatures of about 1,400°C to about 1,600°C for up to several hours.

Contacting the first coated sensor element with a second slurry can be performed with a dwell time in the second slurry and removal rate from the second slurry suitable to give a desired second coating thickness. The dwell time and removal rate can be determined based on the percent solids and the viscosity of the slurry. For example, the dwell time can be less than or equal to about 20 seconds, or, more specifically, about 2 to about 20 seconds, and even more specifically, about 4 to about 10 seconds. The removal rate can be greater than or equal to about 0.05 centimeters per second (cm/sec), or, more specifically, about 0.075 cm/sec to about 0.2 cm/sec, and even more specifically, about 0.1 cm/sec to about 0.125 cm/sec.

Once the first coated sensor element has been removed from the second slurry, the first coated sensor element can again be dried to form a dipped sensor element. Drying can again be performed in a second vertical position with either the sensing end up or down, wherein the first vertical position is different from the second vertical position. Drying conditions can otherwise be similar to that described above.

The dipped sensor element can then be placed in a furnace to remove residual organic compounds and to calcine the ceramic components. Air or inert gas can be flowed over the sensor elements as the temperature of the furnace is raised, e.g., as the temperature is raised through the burnout region of about 300°C to about 600°C. The temperature can then be raised to about 1,400°C to about 1,600°C for up to several hours to calcine the layers.

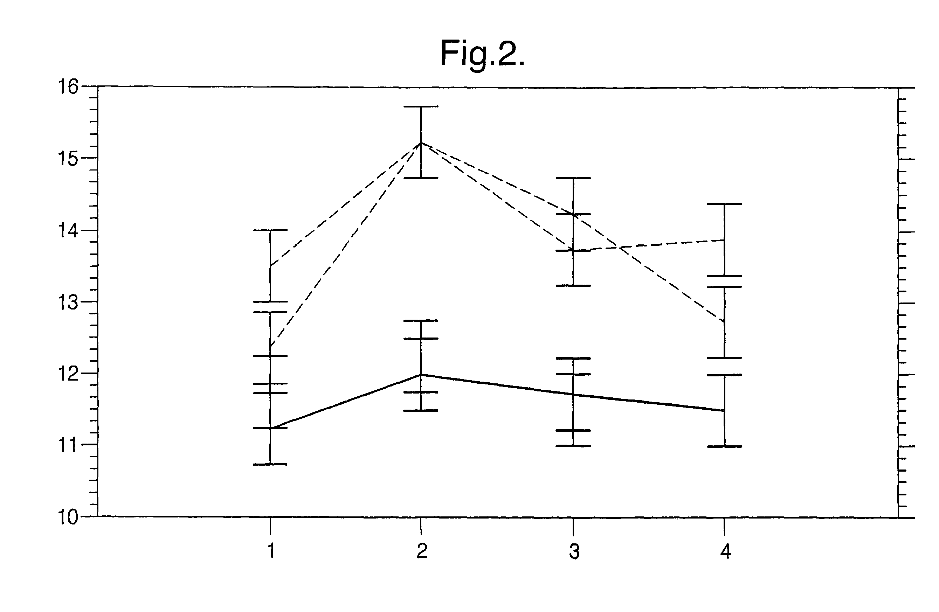

Figure 2 shows the air flow fracture data for sensor elements comprising a heater side chamfered edge, a sensor element comprising first and second metal oxide coatings wherein the first coating is not calcined prior to applying the second coating, and a sensor element comprising first and second metal oxide coatings wherein the first coating is calcined prior to applying the second coating. The air flow fracture test are performed by pre-heating the part for 2 minutes in still air at the prescribed voltage (voltage set is the voltage required to attain the desired wattage, test range is 10-16W). Air can then be passed across the part at a rate of 82 meters per second (m/sec). The part is then checked for breakage (there are multiple methods for testing an element for breakage). The part can be rotated so air flow goes across the part in 4 different orientations for each voltage setting, while checking for breakage after each rotation. The voltage is then stepped up to the next desired set-point and the process is repeated test until 4 orientations have been tested across entire range of wattages or until part breaks.

### Example

A sensor element was coated by dipping the element into a first slurry and drying the element in a vertical position. The coated element was then dipped in a second slurry and dried in an opposite vertical position (e.g., sensing end was up for the first drying and the sensing element was down for the second drying). The element was then calcined. The element was then mounted vertically in an epoxy (or similar) material suitable for mounting and polishing ceramic samples. The epoxy was allowed to harden. Using silica (SiO₂; or the equivalent) coarse (220) grit grinding paper, the tip of the element was ground until just the tip of the element is visible. Then, using SiO₂ (or equivalent) fine (500 to 2,000) grit polishing paper, the element was polished to achieve a smooth surface suitable for examination under magnification. The element was placed under a standard drop gauge (can use a hand-held caliper) to measure the length of the mounted element. The element was then examined under light microscope magnification (10-200X). The coating characteristics were noted visually, measurements of coating thicknesses were taken from predetermined locations on the element (i.e., the center of each flat and adjacent to each corner) using either a calibrated ocular micrometer or integrated image analysis software. Photographs were taken of the element at the time of measurement. The steps of grinding with the course paper through taking of the photographs was repeated at 1 to 2 millimeter (mm) intervals through length of coating. It was discovered that by double dipping the sensor elements and drying these elements in different orientations after each dip, the coating on the sensor elements was more uniform.

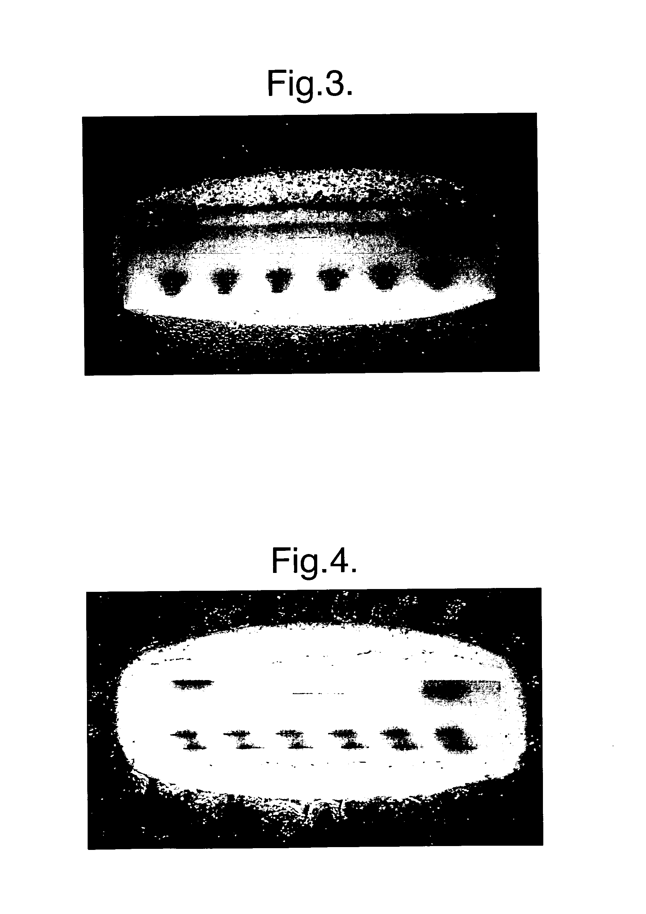

Figures 3 - 6 illustrate cross-sectional views of sensor elements comprising alumina coatings. The cross section is taken at the sensing end by grinding off a portion of the coating and the element. Figure 3 is shows the coating on the sides closest to the sensing end. As can be seen, the coating fails to adequately coat the corners of the sensing element. Figure 4, which is an illustration of the sensing element of Figure 3 that has been further ground, shows that the coating is not uniform across the sensing element. From Figure 3 to Figure 4, the coating thickness has not remained uniform and the corners of the element are not coated.

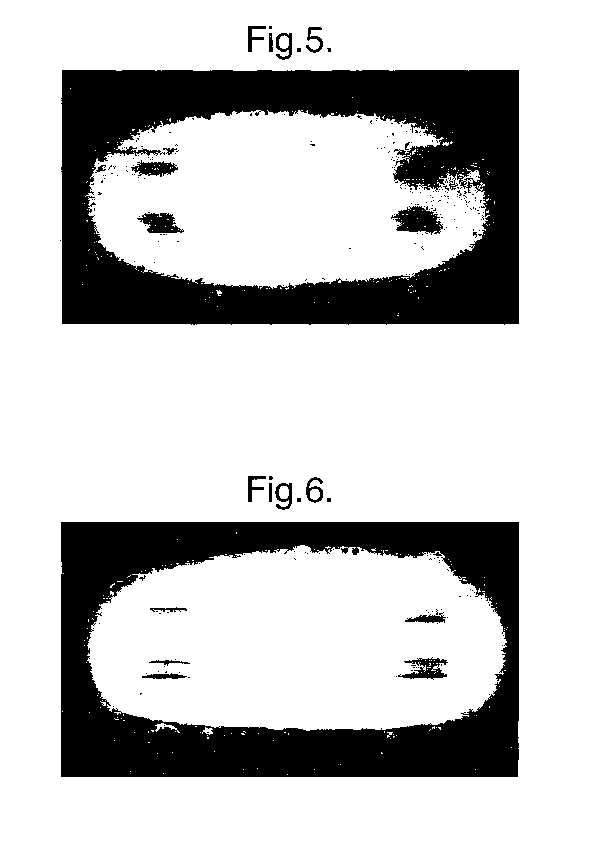

Figures 5 and 6 illustrate cross-sectional views of sensing elements where the coating has been applied in first and second coatings were the sensor has been maintained at different orientations after subsequent applications (e.g., sensing end up and then sensing end down). As can be seen from Figure 5, the corners of the sensing element have a coating. This element is better protected than the element of Figure 3. It is further noted that Figure 6 illustrates the uniformity of the coating further from the sensing end. From Figure 5 to Figure 6, the coating thickness has remained substantially uniform and the corners of the element are coated. Hence, it can be seen that double dipping the sensor element provides an improved coating of the element by coating the corners of the element that were not coatable in a single dip. Additionally, as discussed above, by double dipping the sensor element and drying in different orientations, a more uniform coating that protects the element (even the corners), can be attained.

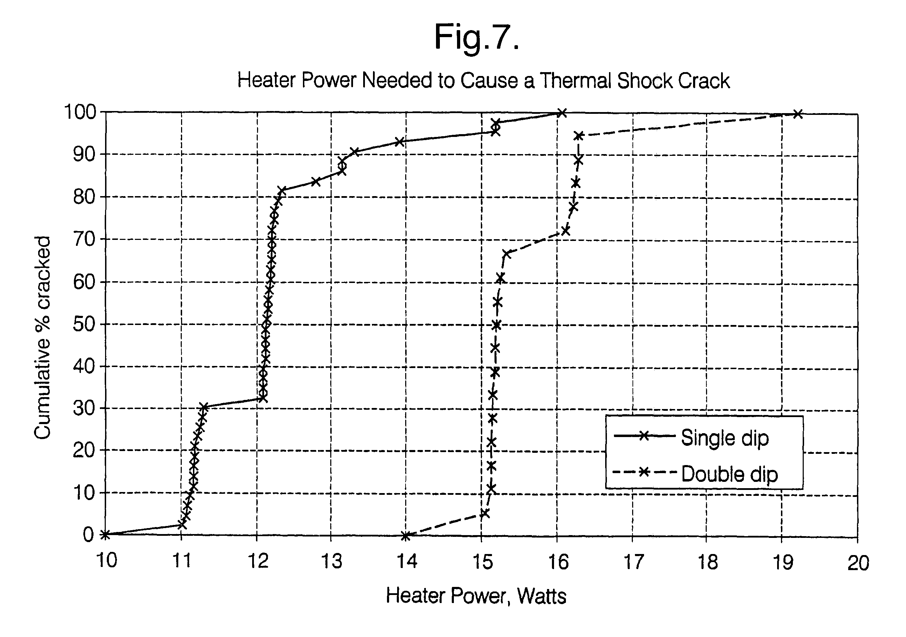

Figure 7 is a graphical illustration of heater power needed to induce a thermal shock crack for a single dipped sensor element and a double dipped sensor element. As can be seen from the graph, the single dip element cracked at about 11 watts (e.g., up to 30%), while the double dip element avoided cracking until about 15 watts; a 36% improvement. It is further noted that the double dipped element did not achieve 80% cracking until greater than 16 watts, while the single dipped sensor achieved 80% cracking at about 12.5 watts. Therefore, a double dip sensor element can retain less than a 10% thermal shock crack for at wattages of up to 12 watts, or, more specifically, up to about 14 watts, or even more specifically, up to about 15 watts.

In summary, by treating the edges of a planar gas sensor element, the edge stress that can result in thermal cracks and other defects that can occur during assembly and use can be reduced. Without being held to theory, it is believed that, at least in part, the thermal stress at the edge of planar sensor elements is due to inconsistent metal oxide coating thickness at the edge of the sensor element as compared to the flat areas of the sensor. The problem has been addressed by chamfering to reduce the mass at the edges of the sensors, by multiple-dipping of the element, with drying of the element between subsequent dips, to increase the mass of the protective coating over the edges of the element, and/or by multiple-dipping the element and by drying between dips in different orientations. These methods produce planar oxygen sensor elements with improved properties such as improved air flow fracture characteristics, and having lower stress at the edges, and exhibiting reduced thermal cracking during usage, i.e., in an automobile.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of forming a sensor (10), comprising:
disposing a reference electrode (22) and sensing electrode (20) on opposite sides of an electrolyte and a heater (62) on a side of the reference electrode (22) opposite the electrolyte to form a sensor element having a sensing end adjacent the reference electrode (22) and sensing electrode (20);
dipping the sensor element in a first slurry, to form a first coated element;
drying the first coated element;
dipping the first coated sensor element into a second slurry;
drying the first coated sensor element to form a dipped element; and
calcining the dipped element to form a calcined sensor element.

2. The method of Claim 1, further comprising chamfering an edge of the calcined sensor element.

3. The method of Claim 1, wherein a first dwell time in the first slurry is less than or equal to about 3 seconds.

4. The method of Claim 3, wherein the first dwell time is less than or equal to about 1 second.

5. The method of Claim 3, wherein a removal rate from the first slurry is about 0.1 cm/sec to about 2 cm/sec.

6. The method of Claim 5, wherein the removal rate from the first slurry is about 0.5 cm/sec to about 1 cm/sec.

7. The method of Claim 1, further comprising calcining the first coated sensor element prior to dipping in the second slurry.

8. The method of Claim 1, a second dwell time in the second slurry is about 4 to about 10 seconds.

9. The method of Claim 8, wherein a first dwell time in the second slurry is less than or equal to about 1 second.

10. The method of Claim 9, wherein a removal rate from the second slurry is about 0.1 cm/sec to about 2 cm/sec.

11. The method of Claim 1, wherein drying the sensor element further comprises drying the sensor element in a first vertical position selected from the group consisting of orienting the sensing end up and orienting the sensing end down; and
wherein drying the first coated element further comprises drying the first coated element in a second vertical position selected from the group consisting of orienting the sensing end up and orienting the sensing end down, wherein the first vertical position and the second vertical position are different.

12. The method of Claim 1, wherein the first slurry and the second slurry are the same slurry.

13. A sensor element made by the method of Claim 1.

14. A sensor element made by the method of Claim 11.
